Europäisches Patentamt

European Patent Office

Office européen des brevets

(19)

(11)  EP 1 192 422 B1

(12)  EUROPEAN PATENT SPECIFICATION

(45) Date of publication and mention
of the grant of the patent:
**08.09.2004  Bulletin 2004/37**

(51) Int Cl.$^7$: **G01F 1/68**, A01K 1/00

(21) Application number: **00946215.1**

(22) Date of filing: **28.06.2000**

(86) International application number:
**PCT/IB2000/000865**

(87) International publication number:
**WO 2001/001082 (04.01.2001 Gazette 2001/01)**

(54) **METHOD AND APPARATUS FOR DETERMINING A FLOW PATTERN OF A FLUID IN A SPACE**

VERFAHREN UND VORRICHTUNG ZUR BESTIMMUNG EINES FLUIDUMSTRÖMUNGSFELDS IN EINEM RAUM

PROCEDE ET DISPOSITIF DE DETERMINATION D'UNE REPRESENTATION DU FLUX D'UN FLUIDE DANS UN ESPACE DONNE

(84) Designated Contracting States:
**AT BE CH CY DE DK ES FI FR GB GR IE IT LI LU MC NL PT SE**

(30) Priority: **28.06.1999  NL 1012459**

(43) Date of publication of application:
**03.04.2002  Bulletin 2002/14**

(73) Proprietor: **KATHOLIEKE UNIVERSITEIT LEUVEN 3000 Leuven (BE)**

(72) Inventors:
• **BERCKMANS, Daniel, Albert
B-3010 Kessel-Lo (BE)**
• **VRANKEN, Erik, Joannes, Matheus
B-3582 Beringen (BE)**
• **JANSSENS, Karl, Hans, Bert
B-3001 Heverlee (BE)**

(74) Representative:
**Prins, Adrianus Willem, Mr. Ir. et al
Vereenigde,
Nieuwe Parklaan 97
2587 BN Den Haag (NL)**

(56) References cited:
**EP-A- 0 171 117          EP-A- 0 643 272
DE-A- 4 127 179          FR-A- 2 732 098**

## EP 1 192 422 B1

**Description**

The invention relates to a method for determining a flow pattern of a fluid in a space.

In all kinds of applications it is important to be able to determine a flow pattern of a fluid. Thus, for instance, in climate controls in, for instance, stables and such agrarian constructions, greenhouses, warehouses, working and living spaces and in other spaces, use is made of data concerning the throughput of a gas stream introduced into the space, the temperature of the introduced air and the temperature in the space. These data are used to regulate, for instance, the inlet opening for the gas stream to be introduced. Efforts are thus made to obtain such a distribution of the gas stream in the space that an optimum climate is obtained for, for instance, living organisms present therein. Demonstrable is that the conditions of life of animals and men in a space are considerably improved by a proper climate control in the space, which is ergonomically and, moreover, economically advantageous, because as a result thereof the yield per animal can be increased, while, moreover, the health of man, animal and plant is positively influenced.

It has been found that by means of the regulations now available no optimum climate control is possible. An important reason therefor is that it has hitherto not been found possible to unambiguously and readily determine flow patterns of gases in the space, preferably during use of the space. In particular, it has been found that dynamic, preferably continuous measurement of the flow pattern of gas streams in the space has hitherto not been possible, at least requires very complex and very expensive arrangements. These known arrangements are therefore not suitable for continuously measuring air patterns during the control thereof.

It is further important, for instance in aeration tanks for waste water, that a proper distribution of a gas stream through the waste water is obtained. This has hitherto been adjusted mainly on the basis of visual observation and experience. It will be clear that, in general, no ideal adjustment will thus be obtained. Moreover, this can only be examined by measuring afterwards and not in situ.

Furthermore, when mixing via liquids, for instance in the preparation of paints and lacquers, foodstuffs, medicaments and the like, it is highly important that a complete mixing is obtained- Here, too, it has hitherto not been possible to measure in situ the flow pattern of a liquid stream passed into a tank or the like.

EP 0 171 117 discloses a system for maintaining a desired temperature in a stable, wherein the incoming and outgoing quantity of air is regulated using an inlet valve and a fan. The temperature is measured by two sensors, one close to the inlet valve and the other close to the fan. Both sensors are connected to a micro processor. This micro processor controls the inlet valve and/or the fan based on variations in the temperature differences and the average temperature measured in both sensors.

EP 0 643 272 discloses a climate control unit for a stable comprising a control unit for regulating a fan based on climate parameters such as temperature and humidity. One or more sensors can be provided for measurement of said parameters.

DE 41 27 179 also discloses a climate control unit for a stable in which humidity, temperature and the introduction of fresh air are controlled based on a control unit, a fan and a. heating element. This publication does not disclose the sensors to be used.

FR 2 732 098 discloses a system for control of ventilation and heating of a poultry stable, in which the quantity of air to be displaced is controlled bases on the temperature and humidity of the stable and the age, weight and sex of the poultry. Displacement of said air is achieved by a series of fans to be controlled continuously, intermitted or in series.

From the prior art as discloses here above it is not known to determine a flow pattern of a fluid for control purposes.

It is an object of the invention to provide a method of the type described in the opening paragraph, in which the above drawbacks are avoided. In particular, it is an object of the invention to provide a method with which the flow pattern of fluid streams in a space can be determined dynamically, in situ, in a relatively simple and unambiguous manner and at relatively low cost. To this end, a method according to the invention is characterized by the measures of claim 1.

Determination of a flow pattern of fluid flows in a space offers the advantage that it can be accurately determined how, for instance, temperature and flow velocity distributions in the space occur. With a method according to the present invention the flow pattern of a fluid stream can be determined in a relatively simple manner and with economic means, for instance from an inlet in a space, in particular by determining a so-called central line thereof and making use of the fact that, in principle, the distribution of magnitudes in an air stream is distributed normally, at least in the known manner, around this central line, at least can be properly estimated. The central line is determined by the connecting line between a relevant inlet and the positions of the maximum or minimum value measured, at least calculated, of the magnitude in the gas stream at the level of the or each sensor. Whether this is determined by the minimum or maximum value, of course depends on the value of the magnitude of the inflowing fluid with respect to the relevant magnitude in the further space. When, for instance, inflowing fluid is relatively cold, use will be made of the minimum temperature at the level of the of each first sensor. When the fluid stream has a relatively high temperature,

2

use will be made of the maximum temperature, starting from temperature as measured magnitude.

It will be clear that on the basis of the flow pattern thus determined it can be determined whether this corresponds to a desired flow pattern, after which, if necessary, readjustment can be effected, for instance by changing the inflow direction, the inflow throughput, heating or cooling, at least treatment of the inflowing fluid stream or of the space, use of by-pass means and the like. Exactly because the flow pattern of the or each fluid stream in the space can be determined accurately and unambiguously, at any desired moment, optimum measurement and/or regulation in the space becomes possible, for instance of the climate or of measurement thereof. The use of an algorithm, for instance included in a process unit, such as a computer, offers the additional advantage that a simple comparison of the determined flow pattern with, for instance, previously inputted desired flow patterns is possible, with the result that regulation becomes even more easily possible. Moreover, an algorithm is very suitable for determining, on the basis of the measured value, the position of the central line and thus of the flow pattern of the or each fluid stream. Because of this, practically instantaneous adjustment is possible. An apparatus for use in a method according to the invention can be carried out in a self-learning manner.

In a first very advantageous embodiment a method according to the invention is characterized by the measures according to claim 5.

By placing in the or each above first position a sensor with which in at least two and preferably at least three spaced apart positions the value of the relevant magnitude in the fluid can be measured, the advantage is obtained that on the basis of, for instance, a weighed average the position of the maximum or minimum value in the above first position in the fluid stream can be relatively readily determined. Thus the position of the central line in the above first position is unambiguously fixed. When use is made of at least three recording elements placed at a known mutual distance from each other, the additional advantage is obtained that the intersection point of the central line with the above first position can be determined, practically independently of further data, such as the value of the relevant magnitude in the surroundings, while, moreover, an excellent estimation of the height of the relevant maximum or minimum value can be made. It will be clear that the use of a larger number of recording elements may enable an even better estimation of the position of the central line and the height of the value prevailing there, in particular when the normal distribution of the relevant value in the fluid stream deviates, but that as a result thereof the cost of such a method will increase, for instance as a result of the required hardware. Depending on the conditions of use and the wishes of the user, in particular the desired accuracy, those skilled in the art can readily determine the optimum number of sensors, the optimum configuration of the recording elements and the positioning thereof with respect to each other.

In a further elaboration a method according to the present invention is further characterized by the measures of claim 8.

Regulation of the inflow throughput of the fluid stream in the space on the basis of the determined flow pattern, if required related to a desired flow pattern, offers the advantage that the flow pattern can be relatively easily readjusted, so as to further optimize it, for instance in the direction of the desired flow pattern:

Regulation of the inflow direction of the fluid in the space offers a further or alternative possibility to adapt the flow pattern of the or each fluid stream in the space on the basis of the or each determined flow pattern, in particular on the basis of a recorded difference between a desired flow pattern and an actual flow pattern.

The foregoing already shows that by means of a method according to the present invention a substantially closed regulating system can be obtained with which, if desired, the flow pattern of the or each fluid stream in the space can be determined and readjusted practically continuously.

Inputting data about the relevant values in the fluid stream, the throughput and/or the composition thereof when it flows out of the space in an algorithm for the control of, for instance, climate or mixing in the space offers the advantage that an even more accurate regulation is possible, in particular of the flow pattern of the or each fluid stream, while, moreover, for instance the discharge of too much heat from the space can be prevented, without the occurrence of undesirable fluid compositions in the space. Also, these data, for instance a difference between inflow throughput and outflow throughput, can be used for the determination and regulation of any pressure build-up in the space.

In a further alternative embodiment a method according to the invention is characterized by the measures according to claim 9.

The use of a method according to the invention, in which as fluid a gas is passed into a space, and in which at least one of the above magnitudes is measured, the advantage is obtained that, for instance for the purpose of climate control or aeration in spaces such as stables, working or living spaces and the like, flow patterns can be determined. The measurement of the temperature is very suitable in this respect, in particular because of the relatively simple recording elements available therefor, but also other energy and mass variables such as flow velocity or flow direction, pressure or density of the gas stream, gas concentration and the like can be measured as magnitude. When for the relevant space the distribution or presence of a specific component, such as, for instance, oxygen, nitrogen, carbon mono- or dioxide or the like is important, recording elements arranged therefor can be used.

A method according to the invention can be used both for flow of gases in gases and for flow of gases in liquids.

In a further alternative embodiment a method according to the invention is characterized by the measures

EP 1 192 422 B1

according to claim 12.

To determine flow patterns of a liquid stream passed into a space, in particular into a space filled with liquid, such a method is very suitable, because on the basis of the measured magnitudes such as temperature, flow velocity or flow direction, pressure, concentration or density the relevant flow pattern can be determined rapidly, easily and accurately and can be readjusted on the basis thereof, so that, for instance, a proper mixing can be obtained or, on the contrary, can be inhibited..

The invention further relates to an apparatus for determining a flow pattern of a gas in a space, characterized by the features according to claim 14.

With such an apparatus the flow pattern of a fluid stream in a space can be determined in a very easy, accurate and economic manner. Such an apparatus is very suitable for use of a method according to present invention.

In a further elaboration an apparatus according to present invention is characterized by the features according to claim 19.

By providing at least one and preferably a series of first sensors, each first sensor comprising at least two, and preferably at least three recording elements which are placed at a known.mutual distance from each other, the advantage is obtained that per first sensor, on the basis of, for instance, a weighed average or by using an estimated curve in the local fluid stream, the position of a minimum or maximum value of the measured magnitude at the level of the relevant first sensor can be readily determined, as well as, if desired, the height thereof, while a series of first sensors placed one after another very readily enables the determination of a curve by the points with the above minimum or maximum values at the first sensors. This curve represents the central line of the flow pattern of the relevant fluid stream. A larger number of first sensors will of course enable a more accurate determination of this central line.

In a further advantageous embodiment an apparatus according to the invention is characterized by the features according to claim 21.

The incorporation of the first measuring device, the process unit and fluid inlet regulating means and/or fluid outlet regulating means into a regulating cycle offers the advantage that regulation of the fluid stream; in particular of the flow pattern thereof and inflow and outflow throughput and/or direction can be determined and readjusted. By making use of suitable algorithms, both regulation afterwards and advance regulation are possible with such an apparatus. The fluid inlet regulating means and/or fluid outlet regulating means may be adjusted, for instance, on the basis of an existing flow pattern, an eventually desired flow pattern and, if any, different external factors, such as, for instance, changes in the filling of the space. It can thus be ensured, for instance, that in a stable the desired flow pattern is practically immediately obtained when additional animals are placed therein or are removed therefrom, when additional heating is effected in the space or, for instance, inlet openings or outlet openings are additionally provided or are closed.

The invention further relates to a space provided with an apparatus according to the invention, to a process unit for use in a method, an apparatus or a space according to the invention, and to a sensor, in particular a temperature sensor, for use in a method, an apparatus, a space or a process unit according to the invention.

Further advantageous embodiments of a method, an apparatus and a space according to the invention are given in the subclaims. To explain the invention, practical examples thereof will be specified with reference to the drawings in which:

Fig. 1 diagrammatically shows, in cross-sectional side view, a ventilated space equipped according to present invention;

Fig. 2 diagrammatically shows a temperature distribution around a minimum temperature in a relative cold air stream, passed through a relative warm space;

Fig. 3 diagrammatically shows the position of a central line of an air stream with respect to temperature recording means of a sensor according to present invention;

Fig. 4 diagrammatically shows, in cross-section, an alternative embodiment of a ventilated space, a stable in the embodiment shown, according to,present invention;

Fig. 5 diagrammatically shows a test arrangement for testing an apparatus according to present invention;

Fig. 6 diagrammatically shows the relation between the inclination of the central line calculated with a test arrangement according to Fig. 5 and with an apparatus according to present invention; and

Fig. 7 diagrammatically shows a diagram of an apparatus according to present invention;

Fig. 8 diagrammatically shows an alternative embodiment of an apparatus according to present invention, for mixing liquids;

Fig. 9 shows a further alternative embodiment of an apparatus according to present invention for mixing a gas into a liquid;

Fig. 10 shows a further alternative embodiment of an apparatus according to the invention, using a contactless measuring device; and

Fig. 11 shows an alternative arrangement of sensors, at least measuring points along a curved line, with an air pattern measured therewith.

In this specification similar or corresponding parts have similar or corresponding reference numerals. As an example of a space, this specification describes a stable, for instance, intended for keeping pigs, cows, chickens or the like, but it will be clear that an apparatus according to present invention is suitable for use in all kinds of spaces, for instance also living or office spaces, storing spaces, spaces in transport means and the like. The practical examples shown should in no way be regarded as limitative.

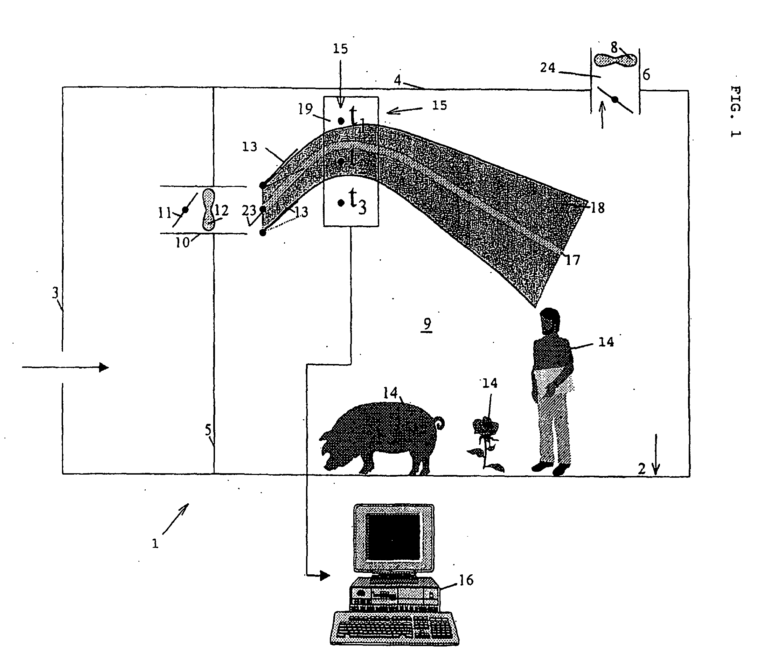

Fig. 1 diagrammatically shows, in cross-sectional side view, a ventilated space, such as a stable 1, comprising a floor 2, outer walls 3, a roof 4 and a partition wall 5. Provided in the roof 4 is an air outlet 6, in this embodiment comprising a valve 7, arranged to at least completely or partly release the passage of the air outlet 6, and a ventilator 8 for sucking air from the inner space 9 of the stable 1 through the air outlet 6. Instead of or besides the ventilator 8 a throughput sensor may be provided for measuring the throughput flowing through the air outlet 6. Such a throughput meter is, for instance, described in Dutch patent application No. 9401632, which is deemed to be inserted herein by reference. Provided in the partition wall 5 is an air inlet 10 at a relatively great height above the floor 2, in which a second valve 11 is provided, so as to be able to release of the air inlet 10 at least completely or partly, as well as a (second) throughput sensor 12, for instance of the above-mentioned type, for measuring the air throughput flowing the air inlet 10. Here, too, besides or instead of the (second) throughput sensor 12 a ventilator may be provided to blow optionally conditioned air into the inner space 9. Near the end of the air inlet 10 directed to the inner space 9, air guide means 13 are arranged, in the drawing in the form of hinged plates, with which the outflow direction of a gas stream from the air inlet 10 to the inner space 9 can be adjusted. As an example, an alternative position for each air guide means 13 is shown in broken lines. Of course, all kinds of different air guide means may be used therefor, if necessary.

In the inner space 9 of the stable 1 animals are kept, symbolically represented by a pig 14. By providing in the inner space 9 a good regulation of at least the air streams extending therein, the climate control in the inner space 9 for living organisms, such as pigs 14, can be optimally regulated. This has a very positive effect on the living conditions for animals, plants or men present therein and, thus, on the economic value and the well-being of the animals. Moreover, this is advantageous in terms of environment and energy.

For the regulation of the inner climate in the inner space 9 of the building 1 an apparatus is used according to the invention, which comprises at least one first sensor 15, coupled to a central process unit, in particular a control unit, such as a computer 16, in which an algorithm to be specified below is provided for the calculation, at least estimation of the position of a central line of an air stream 18 extending from the air inlet 10 into the inner space 9. The central line 17 is determined by a curve drawn through the points in the air stream with the minimum or maximum temperature in each relevant vertical cross-section through the air stream, perpendicular to the flow direction of the air in the relevant air stream. Whether the minimum temperature or the maximum temperature is applicable, depends on the temperature of the air stream with respect to the ambient temperature in the building 1. If the temperature of the air stream, at least when entering through the air inlet 10, is higher than the ambient temperature, the starting-point will be the maximum temperature for the position of the central line 17 of the air stream 18, while the starting-point will be the minimum temperature in the air stream 18 when the temperature of the inflowing air is lower than the ambient temperature in the inner space 9 of the building 1. In stables 1 and such spaces, the latter situation will be usual, so that in this further specification the starting-point will be the position of the central line at the level of the minimum temperatures in the above cross-sections. Other situations will be immediately clear to those skilled in the art.

The first sensor 15 comprises three temperature recording means $T_1$, $T_2$, $T_3$, placed at a fixed mutual distance S above each other, in a known position with respect to the floor 2 and the air inlet 10. The first sensor 15 is preferably placed such that the expected central line 17 extends between the upper temperature recording means $T_1$ and the lower temperature recording means $T_3$. This, however, is not necessary. The temperature recording means are designed as thermometers which are at least resistant to moisture, dust and gases, such as usually present in a building 1, at least in a space in which the apparatus is to be used. The temperature recording means $T_1$, $T_2$, $T_3$ are mounted on a common support 19, so that they can be easily placed.

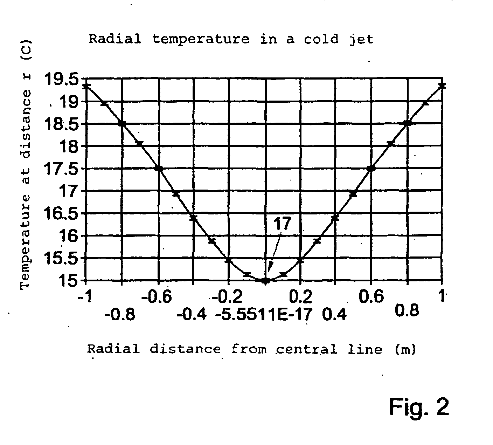

Fig. 2 diagrammatically shows how the normal, expected temperature distribution in an air stream will be with respect to the above central line, in a cold air stream. Fig. 2 clearly shows that an air stream has a practically symmetric, exponential temperature distribution. To base this distribution on theory, reference is made to, inter alia, Malmstrom et al, 1992 and formula 2.

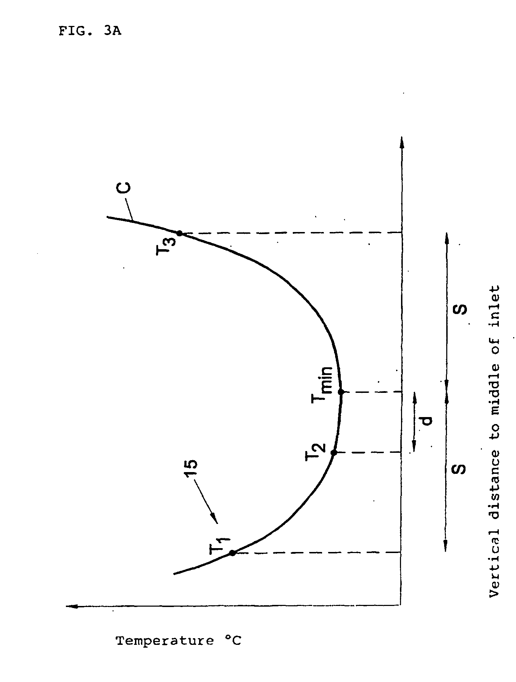

Fig. 3A shows, at the level of the first sensor 15, a temperature curve C, fitted over the temperatures measured with respectively the first temperature recording means $T_1$, the second temperature recording means $T_2$ and the third temperature recording means $T_3$, while the temperature, for instance in degrees Celsius, is given on the vertical axis and the vertical distance below the middle of the air inlet 10 is given on the horizontal axis. The mutual distance S between the temperature recording means $T_1$, $T_2$ and $T_3$ is always the same, as indicated above.

Drawing the curve C through the points $T_1$, $T_2$ and $T_3$ immediately gives the position of the dip $T_{min}$ of the curve C, comparable with the minimum shown in Fig. 2. $T_{min}$ is at a distance D below $T_2$, as directly derivable from Fig. 3A.

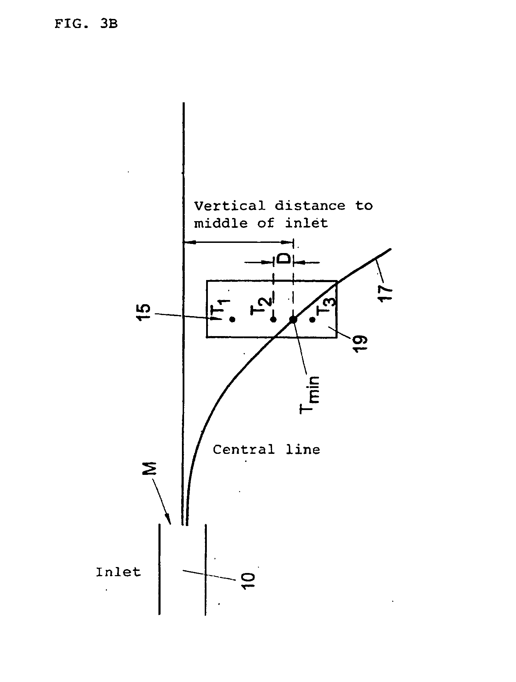

Fig. 3B diagrammatically shows, in side view, the air inlet 10, the first sensor 15 with the temperature recording means $T_1$, $T_2$ and $T_3$ and, drawn therein, the distance D derivable from Fig. 3A, through which the point $T_{min}$ with the minimum temperature can be directly drawn at the level of the first sensor 15. Subsequently, the central line 17 can be drawn, which extends through at least the middle and from the inlet 10 and the relevant point $T_{min}$. In this example, this central line will be slightly curved to below.

The form of the central line can be determined on the basis of models from the literature, for instance Randall, 1975; Randall 1981, Regenscheit, 1995; Mullejans, 1966; Boon, 1978; Randall & Battams, 1979; Holmes, 1974, using measurements of the air throughput, the inside temperature and the temperature of the incoming air, according to formula 1 as indicated below:

$$\gamma_x = \beta . a^n . \frac{(T_r - T_o)}{T_r . V^2} \cdot x^x \qquad (1)$$

wherein $Y_x$: vertical deviation of the initial direction at distance $x$(m) a : vertical inlet dimension (m)
$T_r$ : average space temperature (K)
$T_o$ : inlet temperature (K)
$V$ : ventilation throughput (m³/s)
$x$ : horizontal distance with respect to the inlet (m)
$\beta$ : parameter function of the space dimensions
$\eta$ : real number between 1 and 3
$\alpha$ : real number between 2 and 3

This leads, for instance, to:

$$\gamma_x = (0{,}0585 * g * a^{1.5} * b^{1.5} * (T_r - T_o) * x^3 )/ (v^2 * T_r),$$

Theoretical values for the Archimedes number are given in the Table 1 below, as found in different literature references.

Subsequently, Table 2 gives an estimation for free-flowing fluids, starting from the Archimedes number, according to a number of references for the magnitudes in formula 2, on the basis of which the flow pattern can be estimated.

Table 1

| Air jet trajectory $\frac{y}{d_1} = K.Ar.\frac{x^\alpha}{d_2^\beta}$ | | | | | | |
|---|---|---|---|---|---|---|
| Author | K | $d_1$ | $d_2$ | Ar | $\alpha$ | $\beta$ |
| Koestel (1955) | 0.065 | $d_o$ | $d_o$ | $Ar_{Abr}$ | 3 | 3 |
| Regenscheit (1959) | $0.4.\sqrt{m}$ | a | a | $Ar_{Reg}$ | 2.5 | 2.5 |
| Abramovich (1960) | 0.052 | $d_o$ | $d_o$ | $Ar_{Abr}$ | 3 | 3 |
| Katz (1966) | 0.17 | 1 | d | $Ar_{Kat}$ | 2 | 3 |
| Jackman (1970) | 0.04 | $\sqrt{A}$ | B.H(B + H) | $Ar_{Reg}$ | 3 | 1 |
| Holmes (1974) | 0.0585 | $\sqrt{A}$ | $\sqrt{A}$ | $Ar_{Hol}$ | 3 | 3 |
| Walker (1974) | 0.2 | $\sqrt{A}$ | $\sqrt{A}$ | $Ar_{Hol}$ | 2.44 | 2.44 |
| Kato, Murakami (1988) | 0.42/K | $d_o$ | $d_o$ | $Ar_{Mura}$ | 3 | 3 |
| Berckmans (1993b) | $0.4. \sqrt{m}$ | a | 2.73 + a/ 2 | $Ar_{ber}$+0.45 | 3.3 | 2.5 |

Table 2

| Archimedes Number | $Ar = \dfrac{g.l_c \cdot (T_c - T_o)}{v^2 . T_c}$ | | |
|---|---|---|---|
| author | $T_c$ | $l_c$ | $v$ |
| *Regenscheit (1959)* | $T_r$ | $a$ | $\dfrac{V}{a.b}$ |
| *Abramovich (1960)* | $T_r$ | $\dfrac{2ab}{a+b}$ | $\dfrac{V}{a.b}$ |
| *Müllejans (1966)* | $T_{hs}$ | $\dfrac{2.B.H}{B+H}$ | $\dfrac{V}{B.H}$ |
| *Katz & Wittekindt (1966)* | $T_r$ | $1.27 \cdot \sqrt[5]{\dfrac{(a.b)^3}{a+b}}$ | $\dfrac{V}{a.b}$ |
| *Holmes (1974)* | $T_r$ | $\sqrt{a.b}$ | $\dfrac{V}{a.b}$ |
| *Croome, Gale & Roberts (1975)* | $T_r$ | $H$ | $\dfrac{V}{a.b}$ |
| *Randall (1979)* | $T_{hs}$ | $\dfrac{2.B.H}{B+H}$ | $\dfrac{V}{B.H}$ |
| *Nielsen et al. (1979)* | $T_r$ | $a$ | $\dfrac{V}{a.b}$ |
| *Croome, Xi Li (1987)* | $T_r$ | $\dfrac{2ab}{a+b}$ | $\dfrac{V}{a.b}$ |
| *Kato, Murakami (1988)* | $T_r$ | $H$ | $\dfrac{V}{a.b}$ |
| *Sandberg (1992)* | $T_r$ | $a$ | $\dfrac{V}{a.b}$ |
| *Berckmans (1993b)* | $T_{hs}$ | $H$ | $\dfrac{V}{a.b}$ |

*Table 2: Literature overview of the two-dimensional equations of a free air jet trajectory. The indicated Ar-values refer to table 4. 1 (Kwanten, 1993).*

With:

| | |
|---|---|
| $\alpha,\beta$ | Variable parameters given in table 4.2 |
| $Ar$ | Archimedes number |
| $a$ | Vertical dimension of air inlet (m) |
| $A$ | Inlet section (m$^2$) |
| $b$ | Horizontal dimension of air inlet (m) |
| $B$ | Room width (m) |
| $d_o$ | Inlet hydraulic diameter (m) |
| $d_e$ | Effective hydraulic diameter of the inlet (m) |
| $d_1$ | Inlet dimension according to table 4.2 |
| $d_2$ | Inlet dimension according to table 4.2 |
| $g$ | Gravitational acceleration (m/s$^2$) |
| $H$ | Average room height (m) |
| $l_c$ | Characteristic room dimension (m) |
| $m$ | Turbulence factor (kg/s) |
| $T_c$ | Characteristic room temperature (K') |
| $T_r, t_i$ | Room temperature (K, °C) |
| $T_o, t_o$ | Outside temperature (K; °C) |

$T_{hs}$    Temperature of heated surface (K)
V    ventilation rate ($m^3$/s)
v    Air velocity (m/s)
Vol    Volume of the ventilated space ($m^3$)
y    Vertical deviation of initial horizontal stream direction (m)

The temperature distribution in the cold air stream can, according to Mahlström, 1992, be given according to formula 3, as indicated below:

$$\frac{\Delta t}{\Delta t_x} = \exp(\sigma.\ln2.\eta^2) \tag{3}$$

with:

$t$ : the temperature in a point $\gamma$ (K)
$t_x$ : the temperature on the center line at distance x of the inlet (K)
$t_r$ : the average space temperature (°C)
$\Delta t$ : $t - t_r$ (°C)
$\Delta t_x$: $t_x - t_r$ (°C)
$\eta$ : $r/r_{0,5}$
$r$ : radial distance to the center line (m)
$r_{0,5}$ : r for the point where the velocity is half of the velocity on the center line.

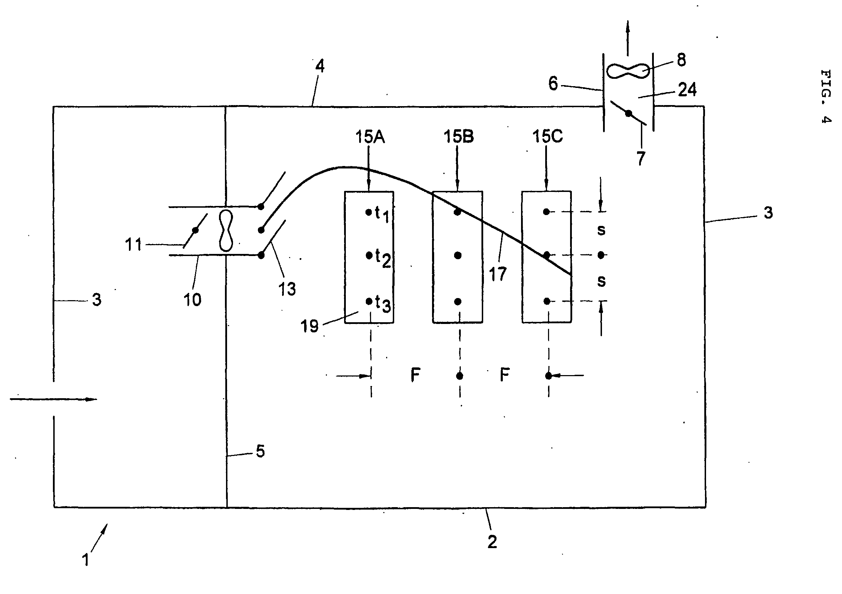

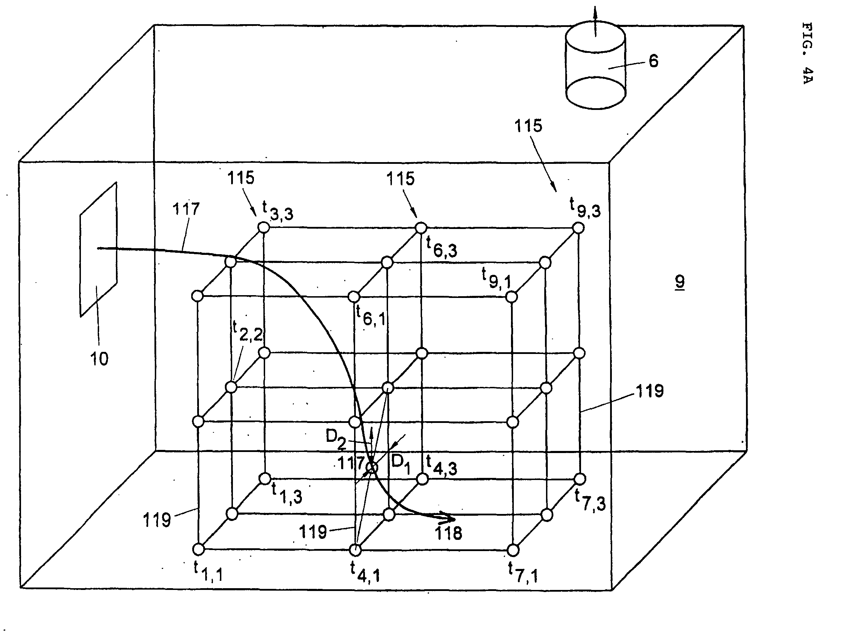

With these two formulas the position of the central line of the flow pattern of the air stream 18 as well as the temperature distribution around it in the relevant air stream 18 can therefore be estimated very accurately.

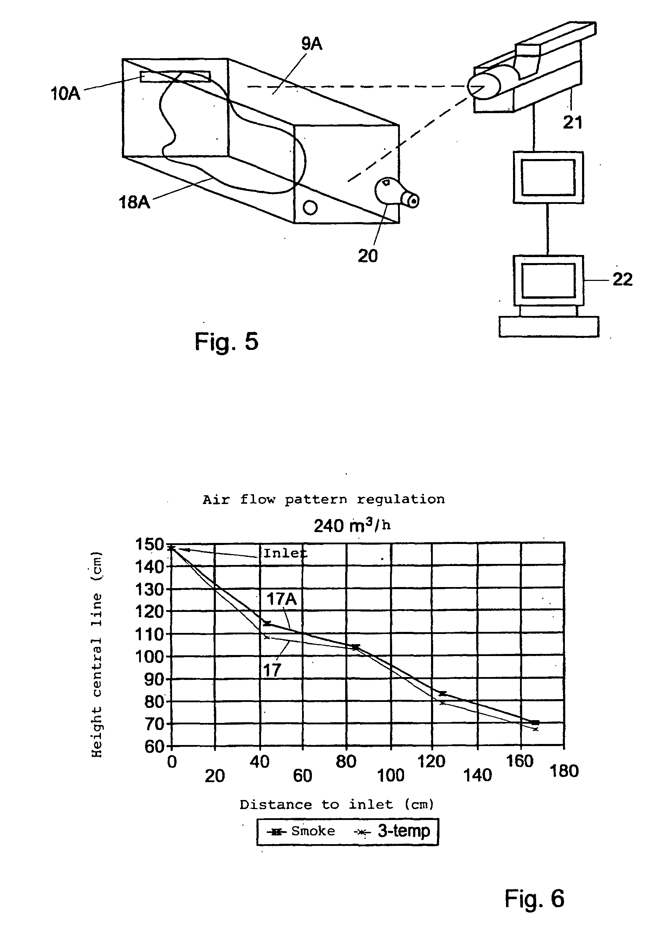

Fig. 5 diagrammatically shows a test arrangement, specified by Derckmans D., Van de Weyer K., De Moor M., 1993. Visualization and quantification of the air flow pattern using image analysis, in: "Building Design, Technology and Occupant Well-Being" by Sterling E., Bieva C., Collett C., February 1993, publication by the American Society of Heating, Refrigerating and Air-Condition Engineers, pp. 207-216; with which by means of smoke a flow pattern in a test space can be determined. In this test arrangement an air inlet 10a is provided in a side wall of a test space, through which smoke is brought into the test space 9a. The smoke 18a, which simulates the air stream 18, is lighted by means of a lamp 20 or laser and recorded with a video camera 21, after which by means of a suitable algorithm the position of the central line is determined in a computer 22. In Fig. 6 the thus determined central line is diagrammatically shown by the line 17a drawn between the diabolo-shaped points, while the central line 17 determined by means of an apparatus according to present invention is also drawn in Fig. 6, between points represented by asterisks. It clearly appears that only a minimum deviation occurs. By means of one first sensor 15 and measurement of the above-mentioned parameters (formulas 1, 2) the position of the central line 17 and the temperature distribution in the air stream can therefore be estimated accurately.
It is of course also possible to place a series of first sensors 15 after each other in the air stream 18, as diagrammatically shown in Fig. 4. Preferably, the first sensors 15A, 15B, 15C are then placed at mutual distances F after each other, such that a matrix of temperature recording means $T_1$ (A,B,C), $T_2$ (A,B,C), $T_3$ (A,B,C) is obtained. Thus an estimation of the position of the central line 17 of the air stream 18 can be directly obtained by drawing a curve through the points $T_{min}$ (A,B,C), obtained as described before, at the respective first sensors 15A, 15B, 15C. Of course, the above-mentioned formulas can then be used as well, but this is not necessary.
Fig. 4A shows a further alternative embodiment of a first temperature sensor 115, in particular suitable for three-dimensional determination of the fluid flow for non-free fluids flow, while on a support 119, for instance, a wire frame for each first sensor 115 a three-by-three matrix of temperature regulating means T is arranged, which can be designated by $T_{1,1} ... T_{3,3}$. With such first temperature sensors 115 a three-dimensional image of an air stream 118 can be estimated, since therewith, for instance with respect to the position of the middle temperature recording means $T_{2,2}$ the vertical distance $D_1$ and the horizontal distance $D_2$ to the minimum temperature $T_{min}$ in the plane of the support 119 in the air stream 118 can be determined. The temperature distribution in the air stream 18 with respect to this central line 117 can again be determined, at least estimated with the above-mentioned formula 2 or by a good fitting when using several sensors.

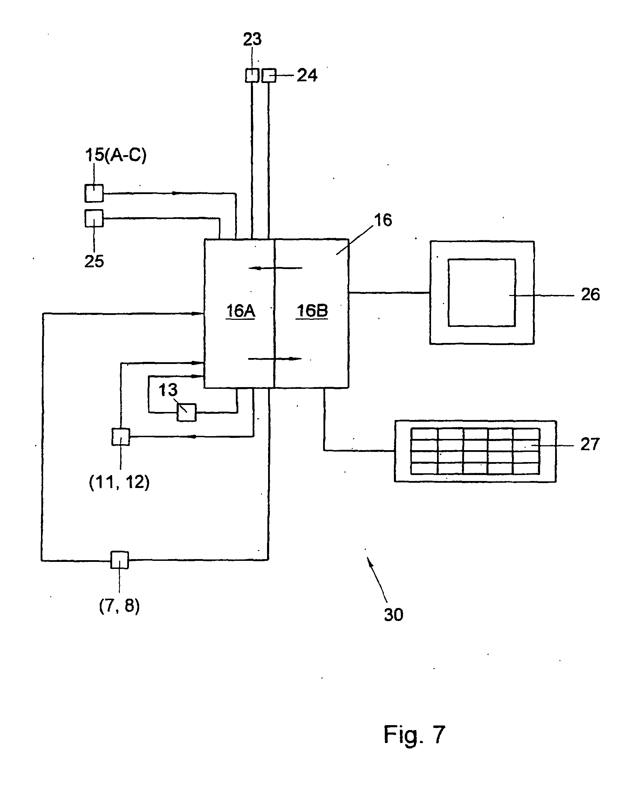

Fig. 7 diagrammatically shows a regulating device 30 according to the invention, in an advantageous embodiment. This regulating device 30 comprises the process unit 16, which comprises a calculating unit 16a and a data bank 16b, which can communicate with each other. Moreover, a display 26 and a keyboard 27 or such apparatus is provided for respectively displaying and inputting data. For this part of the regulating device 30 a computer or the like can of course be used. Provided in the calculating unit 16a is an algorithm into which data can be inputted from the or each first sensor 15 (A-C), a second temperature sensor 23 placed in the air inlet 10 and/or a third temperature sensor 24 placed in the air outlet 24. Moreover, data are inputted to the calculating unit 16a about the position of the air guide means 13, the second valve 11 and the first valve 7, while data are also inputted from the ventilator or throughput sensor 12 and the throughput sensor or ventilator 8 in respectively the air inlet 10 and the air outlet 6, if present. Moreover, further recording means 25 can be connected to the calculating unit, for instance for measuring the ambient temperature inside and outside the space, air humidity and the like, which can be used in the algorithm. It will be clear that the different data will only be available when the different recording means are present.

In the calculating unit 16a the actual flow pattern of the air stream 18 is determined by means of the above algorithm, which can be compared with profiles stored in the data bank 16b. On the basis of this comparison and, if required, further conditions to be inputted via the keyboard, subsequently, if present, the air guide means 13, the first valve 7 and the second valve 11 and optionally ventilators 12 or 8, and other air inlet regulating means and/or air outlet regulating means and the like, can then be controlled, as well as, for instance, air humidifiers, heating means, cooling means and the like. Selections thereof, depending on the space in which climate control is to be carried out, will be immediately clear to those skilled in the art.

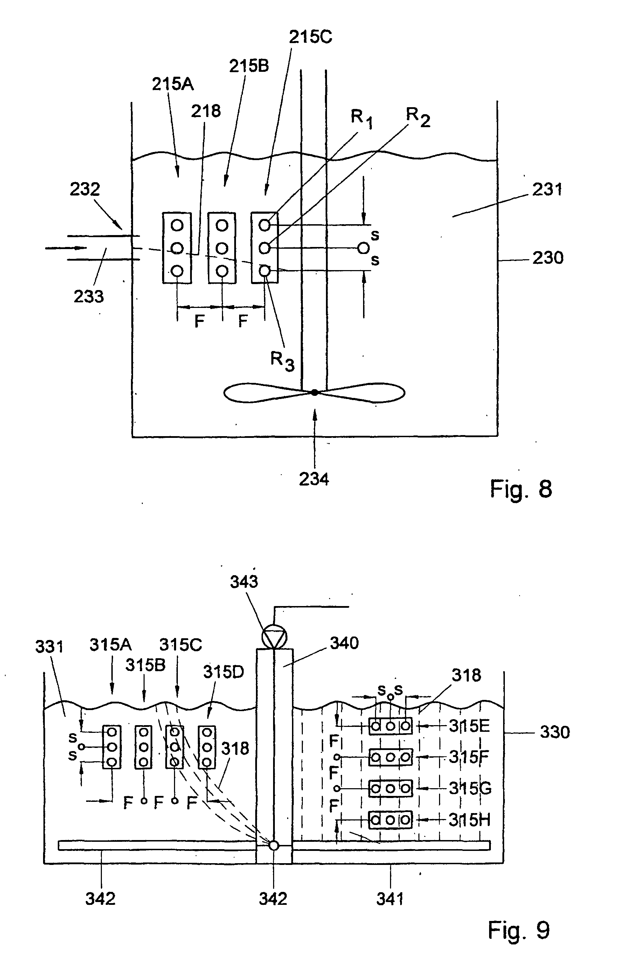

Fig. 8 diagrammatically shows, in cross-sectional side view, a container 230 for a first liquid 231, for instance paint, which container 230 is provided with a inlet opening 232 through which a stream of second liquid 233 can be supplied to the container 230. Fig. 8 diagrammatically shows the center line 218 of the stream 230. As shown, the container 230 has three sensors 215a, 215b, 215c, placed at a regular distance F from each other. Each sensor 215 comprises three flow sensors R1, R2, R3, arranged at a fixed mutual distance S above each other. By means of the matrix of flow recording means, such as flow sensors, the centerline 218 of the stream of second liquid 233 in the container 230 can be determined and can be compared with a desired flow, for instance by means of a regulating device, comparable with the regulating device shown in Fig. 7. Optionally, mixing means 234 can be provided in the container 230, for instance in the form of a stirrer, with which the flow pattern can be influenced, which influencing can again be recorded by means of the sensors 215. It will be clear that thus for all kinds of different liquids and combinations of liquids flow patterns can be determined and are influenced to obtain an optimum flow pattern and, for instance, an optimum mixing between two or more liquids.

Fig. 9 diagrammatically shows, in cross-sectional side view, an aeration tank 330 for, for instance, waste water 331, in which aeration tank 330 a central column 340 is arranged, which is provided with, for instance, four aeration tubes 342 forming a cross and extending horizontally near the bottom 341. By means of pumping means 343 air can be forced through the aeration tubes 342 and can be pressed out through the openings provided therein, into the waste water 331. The air will show a flow pattern of air bubbles, diagrammatically represented by broken lines 318. In the aeration tank 330 a grid of sensors 315a-315d is arranged to the left and 315e-315h to the right of the central column 340, at least in the embodiment shown in Fig. 9. The sensors 315 shown to the left and to the right are only given as practical examples. Each sensor 315 comprises, for instance, three density recording means spaced apart at a fixed distance S, with which, again, the central line 318 of the air flows can be determined. This offers the advantage that, for instance, the rotational speed of the aeration arms can be easily regulated, so as to obtain an optimum distribution of air in the water. To this end, a circular pattern of sensors 315 is preferably arranged concentrically around the central column. It will be clear from Fig. 9 that sensors can be arranged in a container for liquid in a different manner, so as to determine flow patterns of gases therein. In particular when in Figs. 8 and 9 reference is made to a container or tank, this should be broadly interpreted. In natural and semi-natural liquid areas too, such as lakes and the like, sensors can be used according to the invention.

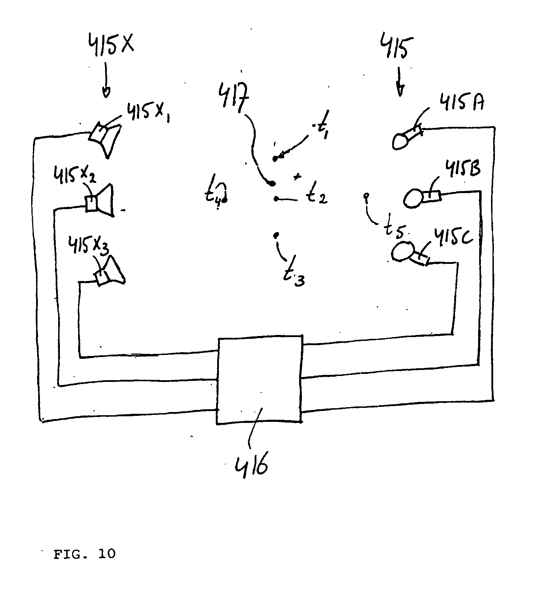

Fig. 10 diagrammatically shows a part of a further alternative embodiment of an apparatus according to the invention, using a contactless measuring device 415, 415X. In this embodiment a series of loudspeakers $415X_1$-$X_3$ is arranged at a first side of a space, a series of microphones 415A-C is arranged at a second side, such that between them the desired values of a magnitude, for instance air temperature, velocity, humidity or the like can be measured. By means of tomographic algorithms, for instance the temperature at all points between the microphones and loudspeakers can be measured. Fig. 10 shows five such points $T_1$-$T_5$. By means of a central control unit 416 the loudspeakers $415X_1$-$X_3$ are controlled for transmitting an acoustic signal, which signals can be received by the microphones 415A-C. On the basis of the occurring changes in the sound signals a desired magnitude can be measured, at least determined, for instance in the above points $T_1$-$T_5$, without the microphones and/or loudspeakers (which are comparable with the sensors described before) coming into contact with an air stream. Such a measuring method, at least the use of acoustic measuring means, is described per se in the later published international patent application WO 99/NL00386.

It will be clear that with the measuring values obtained by means of the central control unit 416, in a manner as described before, for instance the position of the central line 417, symbolically represented by a point, can be determined or the position of a point with, for instance, a specific temperature. In a comparable manner other sources and receivers for (electro)magnetic waves can be used as well. Moreover, sensors at least partly placed in a fluid stream can be used, which can be read out contactlessly at a distance. The advantage of using contactless measuring means is that through them the normal use of a space in which these means are arranged, at least used, is even less impeded, while yet air flows can be determined accurately, on the basis of which, for instance, regulations are possible, while negative influencing of the measuring device by, for instance, gases and liquids can be prevented even better.

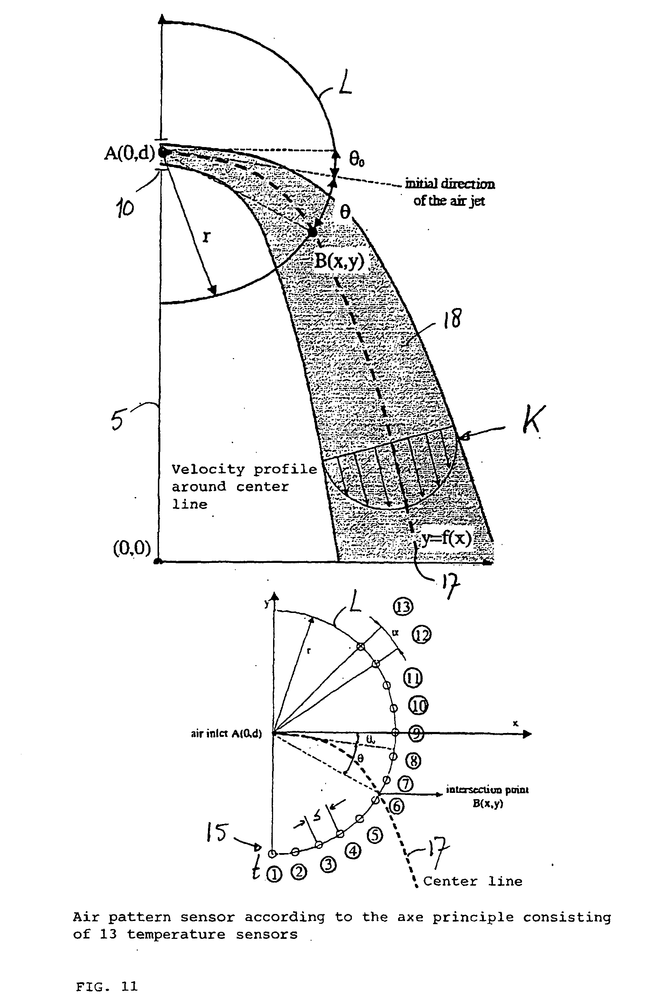

Fig. 11 diagrammatically shows a further alternative arrangement of sensors 15, in which the or each first sensor 15 comprises a series of temperature recording means $T_1$-$T_{13}$ arranged on a curved line L, in particular an arc. In the embodiment shown, an arc-shaped line L is selected with the middle of the air inlet 10 as middle point. The mutual distance between the temperature sensors $T_n$ and $T_{(n + 1)}$ is again S, determined by the angle $\alpha$ enclosed between both sensors T, seen from the above middle point. Again, in the manner described before, the position of the maximum or minimum temperature at least on the line L can be determined therewith, so that the position of the central line 17 can be determined. Fig. 11, at the top, diagrammatically shows an air pattern 18, measured with an apparatus according to Fig. 11, shown at the bottom, in which air pattern 18, at the level of the arrow K, a profile of air flow velocities is shown. Drawn in Fig. 11 are the angle $\theta_0$ which the main direction of movement of the air stream at the level of the inlet 10 encloses with the horizontal and the angle $\theta$, determined by a line through the above middle point and the intersection point of the line L with the central line 17. This intersection point is denoted by B(x,y).

The invention is in no way limited to the practical examples shown in the specification and the figures. Many variations thereof are possible within the scope of the invention described by the claims.

Thus, several first temperature sensors may be provided, while, moreover, the or each first temperature sensor of more or fewer temperature recording means may be provided. When using two temperature recording means per temperature sensor, use will have to be made of the estimated local minimum or maximum air temperature in the air stream, at the level of the relevant temperature sensor. Furthermore, a space can be provided with several air inlets and/or air outlets. For each air stream the flow pattern may then be determined in the manner described before, while mutual temperature influencing can be taken into account. Furthermore, with a regulating device according to present invention advance control can be effected on the basis of a flow pattern determined therewith and previously known factors influencing the climate control, so as to enable rapid anticipation of changing conditions, for instance when other animals are brought into the stable 1 or are led away therefrom. Moreover, other formulas may be used to estimate the curves through the different points with minimum or maximum temperature, that is to say to estimate the position of the central line of the relevant air stream. It will be clear that an improvement of the accuracy of this estimation will enable a more accurate regulation. For the rest, it will be clear that, where in this specification sensors are shown, the described contactless measuring methods may also be used in principle.

These and comparable variations are deemed to fall within the invention which is defined by the claims.

Literature references

Boon, C.R. (1978). Airflow Patterns and Temperature distribution in an experimental Piggery. J. Agric. Engng.Res., vol.23. p.129-139.

Holmes M.J. (1974). Internal flow aspects and circuit design of heating and ventilation systems. Von Karman Institute for fluid dynamics, 15 pp.

Malmstrom, T., & Hassani, V. (1992). Use of constant momentum for supply of cold air. Roomvent '92, Third International Conference, Aalborg, Denmark, September 2-4, 1992, Publisher:DANVAK, Lyngby, Denmark, Vol. 3, pp. 125-140.

Mullejans H. (1966). Uber die Ahnlichkeit der nicht-isothermen Strömung und den Wärmeubergängen in Räumen mit Strahllüftung.

Randall, J.M. (1975). The prediction of Airflow Patterns in Livestock Buildings. J. Agric Engng.Res., vol.20, p. 119-215.

Randall, J.M. (1981). Ventilation system design. In Environmental aspects of housing for animal production, ed. J.A. Clark, Butterworths, London., pp.351-369.

Randall, J.M. & Battams, V.A. (1979). Stability Criteria for Airflow Patterns in Livestock Buildings. J. Agric. Engng. Res., vol24. p.361-374.

Regenscheit, B. (1959). Air movement in air-conditioned rooms (Die Luftbewegung in klimatisierten Räumen).

Kältetechnik, vol.11. pp.3-11.

**Claims**

1. A method for determining a flow pattern of a fluid in a space, wherein:

   - a fluid is passed via at least one inlet into the space,

   wherein

   - in a first position, at a distance from the at least one inlet, a first sensor (15) is provided with which in at least three fixed points spaced apart along a line a parameter of said fluid is measured in at least part of the fluid stream for determining a parameter distribution;
   - determining, on the basis of the measured distribution, at least in respect of the measured parameter, the location of the maximum or minimum value of the relevant parameter on said line; and
   - determining, on the basis of at least the position of this maximum or minimum value, the flow pattern in the space.

2. A method according to claim 1, wherein at least in or near the or each inlet the fluid throughput is measured.

3. A method according to claim 1 of 2, wherein in or near the at least one inlet the inflow direction of the fluid is determined.

4. A method according to any one of the preceding claims, wherein in or near the at least one inlet the relevant parameter of the fluid is measured, wherein preferably, moreover, at a distance from the fluid stream a comparable parameter in the space is determined.

5. A method according to any one of the preceding claims, wherein in the fluid stream in said first position at least three recording elements ($T_1$, $T_2$, $T_3$) for the relevant parameter are arranged at a distance from each other, in particular above each other, for measuring the local value of the relevant parameter, wherein on the basis of the value differences the position of the maximum or minimum value in said first position is determined.

6. A method according to any one of the preceding claims, wherein said fluid parameter is measured contactlessly, preferably acoustically

7. A method according to any one of the preceding claims, wherein in at least two positions placed one after the other in the flow direction of the fluid stream the distribution, at any rate at least two values, are measured.

8. A method according to any one of the preceding claims, wherein on the basis of at least the flow pattern of the fluid stream the throughput of the at least one inlet is regulated and/or the direction of inflow of the fluid into, at least from the at least one inlet is regulated and/or at any rate a part of the fluid stream is passed from the space via at least one outlet,
   wherein in, at any rate near the at least one outlet the relevant parameter of the fluid stream and preferably also the throughput and/or the composition thereof is measured.

9. A method according to any one of the preceding claims, wherein as fluid a gas is passed into a space and wherein as parameter at least one of the following parameters is measured:

   temperature, flow velocity, flow direction, pressure, concentration of a component, density.

10. A method according to claims 9, wherein the gas is passed into a space substantially filled with gas.

11. A method according to claim 9, wherein the gas is passed into a space substantially filled with liquid or suspension.

12. A method according to any one of the preceding claims, wherein as fluid a liquid is passed into a space and wherein as parameter is measured at least one of the following parameters is measured:

    temperature, flow velocity, flow direction,
    pressure, concentration, density.

13. A method according to claim 12, wherein the liquid is passed into a space substantially filled with liquid.

14. An apparatus for determining a flow pattern of a fluid in a space, comprising:

    - at least one first sensor (15), which first sensor (15) is provided with at least three recording elements ($T_1$, $T_2$, $T_3$) for measuring a parameter in at least three points spaced apart along a line; and
    - a process unit to which the values of the parameter measured in said points can be passed;
    - wherein said process unit is provided with an algorithm for determining, during use, on the basis of at least the measured values the position of the maximum or minimum value of the relevant parameter in the fluid stream at the level of the said relevant first measuring device and, at least partly on the basis thereof, determining the flow pattern.

15. An apparatus according to claim 14, wherein at least each first sensor is arranged for contactlessly measuring said parameter, preferably acoustically.

16. An apparatus according to claim 14 or 15, wherein the or each first sensor comprises at least three recording elements for the relevant parameter placed at a mutually known distance, such that the recording elements are placeable for use substantially along a straight or curved line in the fluid stream, while a preferably regular pattern of recording elements in a space can be obtained with a series of first sensors.

17. An apparatus according to any one of claims 14-16, wherein a series of first sensors is arranged to measure said parameter in at least two and preferably at least three positions on a straight or curved line, such that a preferably regular pattern of recordings can be obtained with said series first sensors.

18. An apparatus according to any one of claims 14-17, wherein at least the or each first sensor the process unit and fluid inlet regulating means and/or fluid outlet regulating means are incorporated into a regulating cycle, in which during use the fluid inlet regulating means and/or fluid outlet regulating means provide data with respect to the fluid stream, which data are processed by the process unit, such that at least partly on the basis of these data the fluid inlet regulating means and/or fluid outlet regulating means are regulated.

19. An apparatus according to any one of claims 14-18, wherein the recording elements at least comprise temperature recording elements.

20. A space, provided with an apparatus according to any one of claims 14-19, wherein a preferably regular pattern of at least first sensors is provided, in particular recording elements thereof in at least a part of the space between at least one fluid inlet and at least one fluid outlet.

21. A space according to claim 20, wherein the at least one fluid inlet is provided relatively high in the space.

**Patentansprüche**

1. Verfahren zum Bestimmen eines Strömungsmusters eines Fluids in einem Raum, bei dem:

    ein Fluid über wenigstens einen Einlaß in den Raum geleitet wird,
    wobei

    in einer von dem wenigstens einen Einlaß beabstandeten ersten Position ein erster Sensor (15) vorgesehen ist, mittels welchem an wenigstens drei festgelegten Punkten, die entlang einer Linie voneinander beabstandet sind, ein Parameter des Fluids in wenigstens einem Teil des Fluidstroms gemessen wird, um eine Parameterverteilung festzustellen;

    Bestimmen der Position des Höchstwerts und des Mindestwerts des relevanten Parameters auf der Linie basierend auf der gemessenen Verteilung, wenigstens in bezug auf den gemessenen Parameter und

Bestimmen des Strömungsmusters in dem Raum auf der Basis wenigstens der Position dieses Höchstwerts oder dieses Mindestwerts.

2. Verfahren nach Anspruch 1, bei dem wenigstens in oder nahe dem oder jedem Einlass der Fluiddurchsatz gemessen wird.

3. Verfahren nach Anspruch 1 oder 2, bei dem in oder nahe dem wenigstens einen Einlaß die Einströmrichtung des Fluids bestimmt wird.

4. Verfahren nach einem der vorhergehenden Ansprüche, bei dem in oder nahe dem oder jedem Einlaß der relevante Parameter des Fluids gemessen wird, wobei vorzugsweise ferner in einem Abstand von der Fluidströmung ein vergleichbarer Parameter im Raum bestimmt wird.

5. Verfahren nach einem der vorhergehenden Ansprüche, bei dem an der ersten Position im Fluidstrom wenigstens drei Aufzeichnungselemente ($T_1$, $T_2$, $T_3$) für den relevanten Parameter mit Abstand voneinander angeordnet sind, insbesondere übereinander, um den lokalen Wert des relevanten Parameters zu messen, wobei auf der Basis der Wertdifferenzen die Position des Höchst- oder Mindestwertes an der ersten Position bestimmt wird.

6. Verfahren nach einem der vorhergehenden Ansprüche, bei dem der erste Fluidparameter kontaktlos, vorzugsweise akustisch, gemessen wird.

7. Verfahren nach einem der vorhergehenden Ansprüche, bei dem an wenigstens zwei in Strömungsrichtung des Fluidstroms hintereinander liegenden Positionen die Verteilung, in jedem Fall wenigstens zwei Werte, gemessen werden.

8. , Verfahren nach einem der vorhergehenden Ansprüche, bei dem auf der Basis wenigstens des Strömungsmusters des Fluidstroms der Durchsatz des wenigstens einen Einlasses geregelt und/oder die Einströmrichtung des Fluids hinein, wenigstens aus dem wenigstens einen Einlaß geregelt und/oder in jedem Fall ein Teil des Fluidstroms aus dem Raum über wenigstens einen Auslaß hindurchgeführt wird, wobei in, in jedem Fall nahe dem wenigstens einen Auslaß der relevante Parameter des Fluidstroms und vorzugsweise auch der Durchsatz und/oder die Zusammensetzung desselben gemessen wird.

9. Verfahren nach einem der vorhergehenden Ansprüche, bei dem als Fluid ein Gas in einen Raum geleitet wird und als Parameter wenigstens einer der folgenden Parameter gemessen wird:

   Temperatur, Strömungsgeschwindigkeit, Strömungsrichtung, Druck, Konzentration eines Bestandteils, Dichte.

10. Verfahren nach Anspruch 9, bei dem das Gas in einen im wesentlichen mit Gas gefüllten Raum geleitet wird.

11. Verfahren nach Anspruch 9, bei dem das Gas in einen im wesentlichen mit Flüssigkeit oder Suspension gefüllten Raum geleitet wird.

12. Verfahren nach einem der vorhergehenden Ansprüche, bei dem als Fluid eine Flüssigkeit in einen Raum geleitet wird und als Parameter wenigstens einer der folgenden Parameter gemessen wird:

   Temperatur, Strömungsgeschwindigkeit, Strömungsrichtung, Druck, Konzentration, Dichte.

13. Verfahren nach Anspruch 12, bei dem die Flüssigkeit in einen im wesentlichen mit Flüssigkeit gefüllten Raum geleitet wird.

14. Vorrichtung zum Bestimmen eines Strömungsmusters eines Fluids in einem Raum, mit:

   wenigstens einem ersten Sensor (15), wobei der erste Sensor (15) mit wenigstens drei Aufzeichnungselementen ($T_1$, $T_2$, $T_3$) zum Messen eines Parameters an wenigstens drei entlang einer Linie voneinander beabstandeten Punkten versehen ist, und

einer Verarbeitungseinheit, an welche die Werte der an diesen Punkten gemessenen Parameter geleitet werden können;

wobei die Verarbeitungseinheit mit einem Algorithmus versehen ist, um im Gebrauch auf'der Basis wenigstens der gemessenen Werte die Position des Höchst- oder Mindestwerts des relevanten Parameters im Fluidstrom auf der Höhe der relevanten ersten Messvorrichtung zu bestimmen, und, wenigstens teilweise auf dieser Basis, das Strömungsmuster zu bestimmen,

15. Vorrichtung nach Anspruch 14, bei der zumindest jeder erste Sensor zum berührungslosen, vorzugsweise akustischen Messen des Parameters ausgebildet ist.

16. Vorrichtung nach Anspruch 14 oder 15, bei der der oder jeder erste Sensor wenigstens drei in bekanntem Abstand voneinander angeordnete Aufzeichnungselemente für den relevanten Parameter aufweisen, so daß die Aufzeichnungselemente zur Verwendung im wesentlichen entlang einer geraden oder gebogenen Linie im Fluidstrom platzierbar sind, wobei ein vorzugsweise regelmäßiges Muster von Aufzeichnungselementen in einem Raum durch eine Reihe von ersten Sensoren erhalten werden kann.

17. Vorrichtung nach einem der Ansprüche 14-16, bei der eine Reihe erster Sensoren zum Messen des Parameters an wenigstens zwei, vorzugsweise drei Positionen auf einer geraden oder gebogenen Linie derart vorgesehen sind, daß ein vorzugsweise regelmäßiges Muster von Aufzeichnungen mittels der ersten Sensoren erhältlich ist.

18. Vorrichtung nach einem der Ansprüche 14-17, bei der wenigstens der oder jeder erste Sensor, die Verarbeitungseinheit und eine Fluideinlaßregeleinrichtung und/oder eine Fluidauslaßregeleinrichtung in einem Regelkreis zusammengefaßt sind, in dem im Gebrauch die Fluideinlaßregeleinrichtung und/oder die Fluidauslaßregeleinrichtung Daten bezüglich des Fluidstroms liefern, welche von der Verarbeitungseinheit verarbeitet werden, so daß die Fluideinlaßregeleinrichtung und/oder die Fluidauslaßregeleinrichtung zumindest teilweise auf der Basis dieser Daten geregelt werden.

19. Vorrichtung nach einem der Ansprüche 14-18, bei der die Aufzeichnungselemente zumindest Temperaturaufzeichnungselemente umfassen.

20. Raum mit einer Vorrichtung nach einem der Ansprüche 14-19, bei dem ein vorzugsweise regelmäßiges Muster von wenigstens ersten Sensoren, insbesondere Aufzeichnungselemente derselben, in wenigstens einem Teil des Raums zwischen wenigstens einem Fluideinlaß und wenigstens einem Fluideinlaß vorgesehen ist.

21. Raum nach Anspruch 20, bei dem der wenigstens eine Fluideinlaß relativ hoch in dem Raum vorgesehen ist.


**Revendications**

1. Procédé de détermination d'une représentation du flux d'un fluide dans un espace, dans lequel :

    - un fluide est passé par au moins une entrée dans l'espace,

    dans lequel

    - dans une première position, à une certaine distance de l'entrée au moins au nombre d'une, un premier capteur (15) est fourni avec lequel dans au moins trois points fixes espacés le long d'une ligne, un paramètre dudit fluide est mesuré dans au moins une partie du courant de fluide pour déterminer une répartition de paramètre ;
    - déterminer, sur la base de la répartition mesurée, au moins par rapport au paramètre mesuré, l'endroit de la valeur maximum ou minimum du paramètre approprié sur ladite ligne ; et
    - déterminer, sur la base d'au moins la position de cette valeur maximum ou minimum, la représentation du flux dans l'espace.

2. Procédé selon la revendication 1, dans lequel au moins dans ou près de l'entrée ou de chaque entrée, le débit du fluide est mesuré.

3. Procédé selon la revendication 1 ou 2, dans lequel dans ou près de l'entrée au moins au nombre d'une, la direction d'écoulement du fluide est déterminée.

**4.** Procédé selon l'une quelconque des revendications précédentes,
dans lequel dans ou près de l'entrée au moins au nombre d'une, le paramètre approprié du fluide est mesuré,
dans lequel de plus, à une certaine distance du courant de fluide un paramètre comparable dans l'espace est de préférence déterminé.

**5.** Procédé selon l'une quelconque des revendications précédentes,
dans lequel dans le courant de fluide dans ladite première position, au moins trois éléments d'enregistrement ($T_1$, $T_2$, $T_3$) pour le paramètre approprié sont agencés à une certaine distance les uns des autres, en particulier les uns au-dessus des autres, pour mesurer la valeur locale du paramètre approprié, dans lequel, sur la base des différences de valeur, la position de la valeur maximum ou minimum dans ladite première position est déterminée.

**6.** Procédé selon l'une quelconque des revendications précédentes,
dans lequel ledit paramètre de fluide est mesuré sans contact, de préférence de manière acoustique.

**7.** Procédé selon l'une quelconque des revendications précédentes,
dans lequel dans au moins deux positions placées l'une après l'autre dans la direction d'écoulement du courant de fluide, à n'importe quel débit, au moins deux valeurs de la répartition sont mesurées.

**8.** Procédé selon l'une quelconque des revendications précédentes, dans lequel, sur la base d'au moins la représentation du flux du courant de fluide, le débit de l'entrée au moins au nombre d'une est régulé et/ou la direction d'écoulement du fluide, au moins depuis l'entrée au moins au nombre d'une, est régulée et/ou à n'importe quel débit une partie du courant de fluide est passée de l'espace par au moins une sortie, dans lequel, à n'importe quel débit proche de la sortie au moins au nombre d'une, le paramètre approprié du courant de fluide et de préférence aussi le débit et/ou la composition de celui-ci, sont mesurés.

**9.** Procédé selon l'une quelconque des revendications précédentes,
dans lequel, en guise de fluide, un gaz est passé dans un espace et dans lequel, en guise de paramètre, au moins l'un des paramètres suivants est mesuré :

température, vitesse d'écoulement, direction d'écoulement, pression, concentration d'un composant, densité.

**10.** Procédé selon la revendication 9, dans lequel le gaz est passé dans un espace sensiblement rempli de gaz.

**11.** Procédé selon la revendication 9, dans lequel le gaz est passé dans un espace sensiblement rempli de liquide ou d'une suspension.

**12.** Procédé selon l'une quelconque des revendications précédentes,
dans lequel, en guise de fluide, un liquide est passé dans un espace et
dans lequel, en guise de paramètre, au moins l'un des paramètres suivants est mesuré :

température, vitesse d'écoulement, direction d'écoulement, pression, concentration, densité.

**13.** Procédé selon la revendication 12, dans lequel le liquide est passé dans un espace sensiblement rempli de liquide.

**14.** Appareil de détermination d'une représentation du flux d'un fluide dans un espace, comprenant :

- au moins un premier capteur (15), lequel premier capteur (15) est doté d'au moins trois éléments d'enregistrement ($T_1$, $T_2$, $T_3$) pour mesurer un paramètre en au moins trois points espacés les uns des autres le long d'une ligne ; et
- une unité de traitement à laquelle les valeurs du paramètre mesurées auxdits points peuvent être envoyées ;
- dans lequel ladite unité de traitement est dotée d'un algorithme pour déterminer, pendant l'utilisation, sur la base d'au moins les valeurs mesurées, la position de la valeur maximum ou minimum du paramètre approprié dans le courant de fluide au niveau dudit premier dispositif de mesure approprié et, au moins en partie sur la base de cette valeur, déterminer la représentation du flux.

**15.** Appareil selon la revendication 14, dans lequel au moins chaque premier capteur est agencé pour mesurer sans contact ledit paramètre, de préférence de manière acoustique.

16. Appareil selon la revendication 14 ou 15, dans lequel le ou chaque premier capteur comprend au moins trois éléments d'enregistrement pour le paramètre approprié placés à une distance connue mutuellement, de telle sorte que les éléments d'enregistrement peuvent être placés pour être utilisés sensiblement le long d'une ligne droite ou courbée dans le courant de fluide, tandis qu'une représentation de préférence régulière d'éléments d'enregistrement dans un espace peut être obtenue avec une série de premiers capteurs.

17. Appareil selon l'une quelconque des revendications 14-16, dans lequel une série de premiers capteurs est agencée pour mesurer ledit paramètre en au moins deux et de préférence au moins trois positions sur une ligne droite ou courbée, de telle sorte qu'une représentation de préférence régulière d'enregistrements peut être obtenue avec ladite série de premiers capteurs.

18. Appareil selon l'une quelconque des revendications 14-17, dans lequel au moins le ou chaque premier capteur, l'unité de traitement et le moyen de régulation de l'entrée de fluide et/ou le moyen de régulation de la sortie de fluide sont incorporés dans un cycle de régulation, dans lequel, pendant l'utilisation, le moyen de régulation de l'entrée de fluide et/ou le moyen de régulation de la sortie de fluide fournissent des données concernant le courant de fluide, lesquelles données sont traitées par l'unité de traitement, de telle sorte qu'au moins en partie sur la base de ces données le moyen de régulation de l'entrée de fluide et/ou le moyen de régulation de la sortie de fluide sont régulés.

19. Appareil selon l'une quelconque des revendications 14-18, dans lequel les éléments d'enregistrement comprennent au moins des éléments d'enregistrement de la température.

20. Espace, doté d'un appareil selon l'une quelconque des revendications 14-19, dans lequel une représentation de préférence régulière d'au moins les premiers capteurs est fournie, en particulier des éléments d'enregistrement de ces derniers dans au moins une partie de l'espace entre au moins une entrée de fluide et au moins une sortie de fluide.

21. Espace selon la revendication 20, dans lequel l'entrée de fluide au moins au nombre d'une est agencée relativement haut dans l'espace.

FIG. 1

Radial temperature in a cold jet

Fig. 2

FIG. 3A

FIG. 3B

FIG. 4

FIG. 4A

**Fig. 5**

Air flow pattern regulation

240 m³/h

**Fig. 6**

Fig. 7

Fig. 8

Fig. 9

FIG. 10

Air pattern sensor according to the axe principle consisting of 13 temperature sensors

FIG. 11

27